# EUROPÄISCHE PATENTANMELDUNG

(11) **EP 2 153 750 A2**
(43) Veröffentlichungstag der Anmeldung: **17.02.2010**
(21) Anmeldenummer: 09010490.2
(22) Anmeldetag: 14.08.2009
(51) Int. Cl.: A47B 95/04, A47B 13/08, A47B 95/00

(54) **Profilleiste**

(30) Priorität: 16.08.2008 DE 102008038009
(71) Anmelder: Rehau Ag + Co, 95111 Rehau (DE)
(72) Erfinder: Engelbrecht, Thorsten, 95502 Himmelkron (DE); Rückert, Andreas, 95111 Rehau (DE)

(57) **Zusammenfassung**

Die Erfindung betrifft eine Profilleiste. Um eine Profilleiste bereitzustellen, welche die Eigenschaften einer Profilleiste aus Echtmaterial wie bspw. aus Stein bzw. aus mineralischen Materialien in Bezug auf Haptik und Optik aufweist, aber gegenüber dieser Profilleiste wesentlich leichter verarbeitbar ist, ist erfindungsgemäß vorgesehen, dass die Profilleiste wenigstens eine Schicht aus einem thermoplastisch verarbeitbaren Material aufweist, wobei das thermoplastisch verarbeitbare Material Bestandteile aufweist, die in der Profilleiste aneinander und/oder beabstandet voneinander angeordnet sind, wobei die Bestandteile wenigstens teilweise aus der Oberfläche der Profilleiste herausragen und dass die Oberfläche der Profilleiste eine mittlere Rautiefe R_{z} von wenigstens 25 µm aufweist.

## Beschreibung

Die Erfindung betrifft eine Profilleiste. Derartige Profilleisten werden eingesetzt, um Gegenstände wie Möbelbauteile oder dergleichen zu dekorieren.

Auf dem Markt besteht ein erhöhter Bedarf nach hochwertigen Produkten bei einer erheblichen Produktvielfalt. Im Stand der Technik sind Profilleisten bekannt aus Materialien wie Metall, Glas und dergleichen. Weiterhin sind Profilleisten bekannt, die durch nachträgliche Beaufschlagung mit Dekoren in Form von farbgebenden Verfahren Echtmaterialien wie Holz, Stein und dergleichen nachgebildet sind. Profilleisten aus steinartigen bzw. steinähnlichen Materialien werden bisher nicht eingesetzt.
Die Verwendung von Stein, steinartigen, steinähnlichen bzw. mineralischen Materialien ist technisch sehr aufwendig und entsprechend teuer.
Weiterhin sind Profilleisten bekannt, deren Oberflächen nachträglich durch mechanische Verfahren wie beispielsweise Prägungen bearbeitet sind und die somit eine gewisse Haptik bei der Berührung ausstrahlen sollen.
Nachteilig bei diesen Profilleisten nach dem Stand der Technik ist die aufwendige und insbesondere bei der Verwendung von Echtmaterialien teuere Herstellung.
Ein weiterer Nachteil besteht darin, dass diese Profilleisten, nach dem sie an den Stirnseiten von Möbelbauteilen stoffschlüssig angebracht worden sind, nachträglich an ihren längsrandseitigen Sichtkanten profiliert werden müssen. Hierdurch werden die ursprünglich auf der Oberfläche der Profilleiste aufgebrachten Dekorelemente entfernt und es treten geringfügige optische Unterschiede auf.

Hier setzt die Erfindung ein, die sich die Aufgabe gestellt hat, eine Profilleiste bereitzustellen, welche die Eigenschaften einer Profilleiste aus Echtmaterial wie bspw. aus Stein bzw. aus mineralischen Materialien im Bezug auf Haptik und Optik aufweist, aber gegenüber dieser Profilleiste wesentlich einfacher und kostengünstiger herstellbar bzw. verarbeitbar ist.

Um die der Erfindung zu Grunde liegende Aufgabe zu lösen, stellt die Erfindung eine Profilleiste nach Anspruch 1 bereit, wobei die Profilleiste wenigstens eine Schicht aus einem thermoplastisch verarbeitbaren Material aufweist, wobei das thermoplastisch verarbeitbare Material Bestandteile aufweist, die in der Profilleiste beabstandet voneinander angeordnet sind und wobei die Bestandteile wenigstens teilweise aus der Oberfläche der Profilleiste herausragen und das die Oberfläche der Profilleiste eine mittlere Rautiefe R_{z} von wenigstens 25 µm auf aufweist. Hierdurch ergibt sich eine Steinoptik, die durch unterschiedliche Farbgebungen der in dem thermoplastischen Material enthaltenen Bestandteile entsteht, als auch gleichzeitig eine Haptik, welche Assoziationen zu einer rauen Steinoberfläche erzeugt, so dass die Möbelbauplatte mit der daran angeordneten Profilleiste als aus massivem Werkstoff hergestellt, erscheint.

Die erfindungsgemäße Profilleiste zeichnet sich dadurch aus, dass die Bestandteile in dem thermoplastisch verarbeitbaren Material der Profilleiste teilchenförmig ausgebildet sind, wobei die Teilchen eine Größe von wenigstens 0,05 mm bis 5,0 mm aufweisen, vorzugsweise 0,5 mm bis 1,5 mm. In dieser Ausgestaltungsform lassen sich Profilleisten herstellen, die sowohl eine haptisch spürbare Mikrorauhigkeit aber auch eine Makrorauhigkeit aufweisen, welche die Assoziation zu einer Profilleiste aus Stein, steinartigen, steinähnlichen Materialien bzw. mineralischen Materialien herstellt.

In einer weiteren vorteilhaften Ausgestaltungsform der erfindungsgemäßen Profilleiste ist das Verhältnis des Schmelzpunktes der Bestandteile zum Schmelzpunkt des thermoplastisch verarbeitbaren Materials der Profilleiste wenigstens 1,1. Hierdurch kann vorteilhafterweise eine Profilleiste wirtschaftlich hergestellt werden, die eine Oberflächenrauhigkeit von wenigstens etwa 30 µm aufweist, welche durch die in der Herstellung unterschiedlichen Schmelzpunkte realisierbar ist. Der beispielsweise höhere Schmelzpunkt der in dem thermoplastischen Material der Profilleiste enthaltenen Bestandteile führt dazu, dass diese im Herstellungsverfahren an ihrer Oberfläche angeschmolzen sind und so einen wirksamen Verbund in der Profilleiste herstellen, jedoch gleichzeitig zu einer rauen Oberfläche der Profilleiste führen.

Es hat sich weiter als vorteilhaft herausgestellt, dass die Bestandteile des thermoplastisch verarbeitbaren Materials der Profilleiste eine Dichte von wenigstens 0,8 g/cm³ bis maximal 2,5 g/cm³ aufweisen, was dazu führt, dass die erfindungsgemäßen Profilleisten in unterschiedlichen Oberflächenstrukturen, Dekoren sowie Gewichten herstellbar sind.

Es hat sich weiterhin als sehr vorteilhaft herausgestellt, dass das thermoplastisch verarbeitbare Material der Profilleiste Bestandteile aufweist, die wenigstens teilweise vernetzt sind. Dabei ist von wesentlichem Vorteil, dass das thermoplastisch verarbeitbare Material der Profilleiste 2 % bis 80 %, vorzugsweise 5 % bis 25 % Bestandteile aufweist, die wenigstens teilweise vernetzt sind. Hierdurch können wiederum erfindungsgemäße Profilleisten mit unterschiedlicher Oberflächenrauhigkeit zur Verfügung gestellt werden, welche auch wirtschaftlich und kostengünstig herstellbar sind.

Dabei hat es sich weiterhin als vorteilhaft erwiesen, dass die Bestandteile des thermoplastisch verarbeitbaren Materials der Profilleiste einen Vernetzungsgrad von etwa 5 % bis 95 % aufweisen. Hierdurch ist eine breite Variationsmöglichkeit des thermoplastisch verarbeitbaren Materials der Profilleiste möglich, mit dem gezielt unterschiedlich strukturierte bzw. raue Oberflächen der Profilleiste wirtschaftlich herstellbar sind.
In einer weiteren ebenfalls vorteilhaften Ausgestaltung der erfindungsgemäßen Profilleiste zeichnet sich diese aus durch einen mehrschichtigen Aufbau, wobei zumindest eine Schicht der Profilleiste Bestandteile aufweist, wobei die Bestandteile wenigstens teilweise aus der Oberfläche der Profilleiste herausragen, wobei die Oberfläche der Profilleiste eine mittlere Rautiefe von wenigsten 25 µm aufweist und zumindest eine Schicht der Profilleiste im Extrusionsverfahren gefertigt ist.
Diese weitere Schicht der erfindungsgemäßen Profilleiste ermöglicht eine einfache Verarbeitung und Montage der erfindungsgemäßen Profilleiste, da diese gegenüber einer Profilleiste mit einschichtigem Aufbau steifer ist, eine stabilere Struktur aufweist und insbesondere an der mit der Stirnseite einer Möbelplatte zu verbindenden Oberfläche eine reduzierte Rauigkeit aufweist, die günstig für die Verklebung ist und entsprechende Fugendichtheit gewährleistet..
Es erweist sich als sehr vorteilhaft, wenn zumindest eine Schicht der Profilleiste vorzugsweise aber auch zwei, drei oder mehrere Schichten der Profilleiste im Extrusionsverfahren hergestellt ist bzw. sind. Die Fertigungstechnik der Extrusion erweist sich dabei als besonders wirtschaftlich und praktikabel, weil dadurch ein stabiles und zugfestes Stranggut hergestellt wird, das den in der Praxis auftretenden Belastungen bei den bevorzugten Anwendungen der Profilleiste Stand hält. Somit ist die erfindungsgemäße Profilleiste gegenüber denen aus Echtmaterial wesentlich leichter herstellbar, verarbeitbar, insbesondere leichter zerteilbar bzw. montierbar.

Es hat sich als sehr nützlich herausgestellt, dass eine Profilleiste mit einem mehrschichtigen Aufbau, wobei zumindest eine Schicht der Profilleiste Bestandteile aufweist, die wenigstens teilweise vernetzt sind und zumindest eine Schicht der Profilleiste im Extrusionsverfahren hergestellt ist, eine auf jeden Anwendungsfall optimierte Geometrie und Rauigkeit aufweist. Dabei ist die erfindungsgemäße Profilleiste so ausgebildet, dass sie eine Dekorschicht aufweist, in der die Bestandteile angeordnet sind und die an einer Sichtseite der Profilleiste sichtbar ist.
In Abhängigkeit von dem bevorzugten Anwendungsfall kann es von Vorteil sein, wenn ein Anteil der Bestandteile in der Profilleiste und / oder der Dekorschicht zwischen 5 und 90 Gewichts-Prozent, vorzugsweise zwischen 30 und 70 Gewichts-Prozent bevorzugt zwischen 40 und 60 Gewichts-Prozent beträgt.
Ein Anteil der im thermoplastisch verarbeitbaren Material enthaltenen Bestandteile von wenigstens 5 Gewichts-Prozent reicht in der Regel aus, um insbesondere der Dekorschicht der Profilleiste die charakteristische Haptik einer steinigen Oberfläche zu vermitteln, wenn man davon ausgeht, dass die restlichen etwa 95 Gewichts-Prozent aus einen im Wesentlichen glatten Material bestehen.

Es ist weiterhin sehr vorteilhaft, wenn die Profilleiste im an sich bekannten Koextrusionsverfahren gefertigt ist. Diese Fertigungstechnik erweist sich als besonders wirtschaftlich und praktikabel, da durch das Koextrusionsverfahren die Schichten der erfindungsgemäßen Profilleite zuverlässig und dauerhaft verbunden werden können.

Es liegt auch im Rahmen der Erfindung, dass die Profilleiste als Kantenband, Wandanschlussprofil, Sockelleiste, Kabelkanal, Fensterprofil oder Rollladenprofil ausgebildet ist. Das Kantenband hat beispielsweise die Funktion, ein Möbelstück bzw. eine Möbelbauplatte oder dergleichen dadurch zu schützen, dass die schmale Stirnseite damit kaschiert, versiegelt und optisch bzw. haptisch aufgebessert ist. Die Verarbeitung und Montage der erfindungsgemäßen Profilleiste gestaltet sich bei diesen genannten Anwendungsfällen besonders einfach.
Es hat sich weiterhin als sehr vorteilhaft herausgestellt, dass die Profilleiste eine Trägerschicht aufweist, die eine gegenüber der Dekorschicht unterschiedliche chemische Zusammensetzung aufweist. Als Trägerschicht kann beispielsweise eine Schicht eingesetzt werden, die der erfindungsgemäßen Profilleiste eine stabile und steife Struktur verleiht, so dass diese Profilleiste leichter herstellbar, verarbeitbar und montierbar ist.

Dabei hat es sich als vorteilhaft erwiesen, dass das thermoplastisch verarbeitbare Material der Profilleiste und / oder der Trägerschicht und / oder der Dekorschicht ausgewählt ist aus der Gruppe der Polyolefine der Acrylnitril-Butadien-Styrole, der Polyamide, der Polyvinylchloride, der Ethylenvinylacetate, der Polyacetale, der Polymethylmethacrylate, der Polyethylenterephthalate, der Polycarbonate, der thermoplastischen Copolyester, der Styrol-Blockcopolymere, der thermoplastischen Copolyamide, der thermoplastischen Elastomere und dergleichen oder aus Mischungen dieser. Derartige Materialien eignen sich ganz besonders gut als sogenanntes Matrixmaterial bzw. auch als Bindemittel für den Einsatz in der erfindungsgemäßen Profilleiste, da sie die Bestandteile leicht aufnehmen können, um damit ein thermoplastisch verarbeitbares Gemisch zu bilden.
Die thermoplastisch verarbeitbaren Materialien selbst sind dabei sehr leicht verarbeitbar und weisen Materialeigenschaften auf, die im Rahmen der vorliegenden Erfindung besonders vorteilhaft zur Geltung gebracht werden können.

Es liegt aber auch im Rahmen der Erfindung, dass als Bindemittel bzw. Matrixmaterial in der Dekorschicht und als Hauptkomponente in der Trägerschicht identische Materialien, vorzugsweise identische thermoplastisch verarbeitbare Materialien eingesetzt werden und das die Dekorschicht und die Trägerschicht stoffschlüssig verbunden und / oder einstückig hergestellt sind.
Es kann aber auch sehr vorteilhaft sein, wenn ein Anteil des Kunststoffes in der Profilleiste und / oder der Trägerschicht und / oder in der Dekorschicht zwischen 90 und 10 Gewichts-Prozent, vorzugsweise zwischen 70 und 30 Gewichts-Prozent, bevorzugt zwischen 60 und 40 Gewichts-Prozent und besonders bevorzugt 50 Gewichts-Prozent beträgt.
Durch gezieltes Abmischen des thermoplastisch verarbeitbaren Materials im Verhältnis zu den Bestandteilen können die Eigenschaften der erfindungsgemäßen Profilleiste optimal auf den bevorzugten Anwendungsfall abgestimmt werden.

Es kann sich weiterhin als nützlich erweisen, wenn die Dekorschicht und / oder die Trägerschicht Füll- und / oder Verstärkungsstoffe aufweist, vorzugsweise mineralische Füllstoffe wie Kreide, Talkum und dergleichen bzw. organische / anorganische Verstärkungsstoffe wie Glasfasern, Kohlefasern und dergleichen.

Dabei ist es sehr vorteilhaft, wenn ein Anteil der Füll- und / oder Verstärkungsstoffe in der Profilleiste und / oder der Dekorschicht zwischen 3 und 30 Gewichts-Prozent, vorzugsweise zwischen 5 und 25 Gewichts-Prozent, bevorzugt zwischen 7 und 20 Gewichts-Prozent beträgt. Eine Trägerschicht ohne Füll- und / oder Verstärkungsstoffe wird beispielsweise dort eingesetzt, wo eine hohe Schlagzähigkeit erwünscht ist.
Es kann sich als sehr hilfreich erweisen, wenn die Trägerschicht der Dekorschicht unmittelbar benachbart angeordnet ist, so kann ohne zwischenliegende Haftvermittlerschichten eine besonders kompakter, stabiler und leicht verarbeitender Materialverbund der Profilleiste geschaffen werden.

Dabei hat es sich als sehr vorteilhaft erwiesen, wenn die Profilleiste eine Breite zwischen 10 und 150 mm, vorzugsweise zwischen 20 und 100 mm aufweist. Diese Abmessungen sind für die meisten Anwendungsfälle vorteilhaft, beispielsweise für den Anwendungsfall als Kantenband zur Abdeckung, Verschönerung und Verkleidung der Stirnkanten von Möbelbauplatten.

Als hat sich als nützlich erwiesen, wenn die Profilleiste eine Dicke zwischen 0,1 und 10 mm, vorzugsweise zwischen 0,5 und 5 mm aufweist. Bei einer derartigen Dicke ist die Profilleiste beispielsweise sehr leicht von einem gestreckten Zustand in einen aufrollbaren Zustand überführbar und umgekehrt, ohne Schaden zu erleiden. Somit ist die erfindungsgemäße Profilleiste nicht nur leicht herstellbar, sondern auch sehr leicht transport- und lagerfähig.

Es hat sich auch als vorteilhaft herausgestellt, wenn ein Verhältnis der Dicke der Dekorschicht zur Dicke der Trägerschicht zwischen 0,1 und 10 m, vorzugsweise zwischen 1 und 5 beträgt. Je nach dem bevorzugten Anwendungsfall und dem erforderlichen Eigenschaftsprofil kann das Verhältnis der Dicke der Dekorschicht zur Dicke der Trägerschicht innerhalb der vorgegebenen Normen bzw. Grenzen eingestellt werden.
Es hat sich weiter in Versuchen als sehr vorteilhaft herausgestellt, wenn das Verhältnis der Dicke der Dekorschicht zu der Dicke der Trägerschicht etwa 3 beträgt, wobei die Dekorschicht etwa 0,8 bis 1 mm und die Trägerschicht etwa 0,25 bis 0,4mm dick ist.
Es kann weiterhin sehr vorteilhaft sein, wenn die Dekorschicht und / oder die Trägerschicht wenigstens einen Farbstoff enthält, beispielsweise ein Pigment. Dadurch kann auf einfachem Wege eine bevorzugte Einfärbung der einzelnen Schichten der Profilleiste erreicht werden, wobei der Anteil an beispielsweise Pigmenten etwa 0,01 bis 10 % betragen kann.

Dabei ist es sehr nützlich, wenn die Trägerschicht in einem Farbton eingefärbt ist, welcher im Wesentlichen einem Grundfarbton der Dekorschicht entspricht. Dadurch kann der abweichende Farbton der Bestandteile des thermoplastisch verarbeitbaren Materials zusätzlich verstärkt und hervorgerufen werden, was den optischen, ästhetischen und haptischen Gesamteindruck der erfindungsgemäßen Profilleiste weiter aufwertet.
Es kann weiterhin sehr nützlich sein, wenn die Profilleiste, vorzugsweise an einer Sichtseite eine Prägung aufweist. Die Prägung beeinflusst die haptische Wahrnehmung beim Berühren der Profilleiste positiv.

Es liegt auch weiterhin im Rahmen der Erfindung, dass die die Sichtseite der erfindungsgemäßen Profilleiste bildende Oberfläche durch an sich bekannte spanabhebende Bearbeitung eine glatte Oberfläche aufweist, die nach möglicher Politur bzw. Aufbringen eines Lackes eine optimale steinartige Optik aufweist.

Dabei ist es besonders vorteilhaft, wenn die Bestandteile des thermoplastisch verarbeitbaren Materials der Profilleiste über den gesamten Querschnitt in räumlich gleichmäßiger Verteilung eingelagert sind.

Es kann sich weiterhin als sehr vorteilhaft erweisen, wenn die Profilleiste eine Imprägnierung und / oder eine Beschichtung mit beispielsweise Wachs und / oder Lack aufweist. Durch diese Maßnahmen wird die Profilleiste zusätzlich gegenüber von Umwelteinflüssen geschützt und eine mögliche Alterung durch beispielsweise UV-Strahlen wird entsprechend verlangsamt. Hierdurch kann die Lebensdauer der Profilleiste und somit auch der Möbelbauplatte entscheidend verlängert werden.

Eine weitere Ausführung der Erfindung betrifft einen Gegenstand, insbesondere ein Möbelstück, eine Möbelbauplatte, ein Holzwerkstoffelement oder dergleichen mit einer Profilleiste nach einer der vorangegangenen Ausführungen.
Durch die Profilleiste können offenliegende Stirnseiten bzw. Kanten des Gegenstandes gegen Umwelteinflüsse versiegelt und optisch kaschiert werden, um beispielsweise ein Eindringen von Feuchtigkeit und / oder Schmutz zu verhindern. So wird der Gegenstand durch die Profilleiste einerseits geschützt und andererseits in optischer, ästhetischer sowie haptischer Sicht aufgewertet.

Im Rahmen der Erfindung wird der Begriff Möbelbauplatte bzw. Holzwerkstoffelement so verstanden, dass das Element aus natürlichem Holz bzw. aus Einzelelementen aus natürlichem Holz oder aus einem aus Holz hergestellten Material besteht. Elemente, die aus Holz bestehenden Einzelelementen hergestellt sind, können beispielsweise Tischlerplatten sein. Materialien, die aus Holz hergestellten werden, können beispielsweise mitteldichte Faserplatten (MDF), hochdichte Faserplatten (HDF), Hartfaserplatten, Spanplatten und dergleichen sein.

Es hat sich weiterhin als sehr nützlich erwiesen, wenn die Profilleiste mit einer der Sichtseite abgewandten Unterseite an einer Kante des Gegenstandes angebracht ist.
Die die Bestandteile des thermoplastisch enthaltenen Material enthaltende Schicht definiert vorzugsweise die Sichtseite der Profilleiste und vermittelt so den Eindruck, den Stein, steinartige, steinähnliche Materialien bzw. mineralische Materialien im Hinblick auf Haptik bzw. Optik vermitteln würden. Durch den erfindungsgemäßen Schichtaufbau ist die erfindungsgemäße Profilleiste allerdings wesentlich leichter handhabbar und verarbeitbar als eine vollständig aus Steinmaterialien bestehende Profilleiste.

Eine weitere Ausführung der Erfindung betrifft ein Verfahren zur Herstellung einer Profilleiste, wobei das Verfahren die folgenden Schritte umfasst:
a) Überführen eines Werkstoffgemisches mit einem Anteil an Bestandteilen welche teilchenförmig ausgebildet sind und eine Größe von wenigstens 0,05 mm bis 5,0 mm aufweisen in einem Zustand, in welchem dieses Werkstoffgemisch im Extrusionsverfahren thermoplastisch verarbeitbar ist,
b) Überführen eines thermoplastischen Werkstoffes in einen Zustand, in welchem der thermoplastische Werkstoff im Extrusionsverfahren verarbeitbar ist,
c) Verarbeiten des Werkstoffgemisches und des thermoplastischen Werkstoffes im Wege der Koextrusion zu einer Profilleiste
nach einer der vorangegangenen Ausführungen.

Die Bestandteile des thermoplastisch verarbeitbaren Materials welche eine Dichte von wenigstens 0,8 g/cm³ bis maximal 2,5 g/cm³ aufweisen und / oder wenigstens teilweise vernetzt sind, können als Teilchen, Fasern, Granulat bzw. Mehl vorliegen.

In einem Schritt a) wird ein als Granulat vorliegendes thermoplastisch verarbeitbares Material für die Profilleiste erhitzt, so dass der als Bindemittel bzw. Matrixwerkstoff eingesetzte, thermoplastische Kunststoff in einen flüssigen oder zumindest zähplastischen Zustand versetzt wird. Die Massetemperatur des Werkstoffgemisches sollte eine Temperatur von etwa 190 bis 230 °C sein.

In Schritt b) wird der thermoplastische Werkstoff für die Trägerschicht der Profilleiste 1 aufgeschmolzen bzw. in einen flüssigen oder zumindest zähplastischen Zustand versetzt.

In Schritt c) werden das Werkstoffgemisch für die spätere Dekorschicht und der thermoplastische Kunststoff für die spätere Trägerschicht im Koextrusionsverfahren zusammengeführt, so dass die spätere Dekorschicht und die spätere Trägerschicht stoffschlüssig verbunden und einstückig aneinander angeordnet ausgebildet sind.

In einem nächsten Schritt kann die erfindungsgemäße Profilleiste mit einer Imprägnierung beaufschlagt und / oder an der späteren Sichtseite mit einer Beschichtung aus Wachs und / oder Lack beschichtet werden.

Ein bevorzugtes Ausführungsbeispiel der vorliegenden Erfindung wird nachstehend im Bezug auf die beiliegende Zeichnung beschrieben.

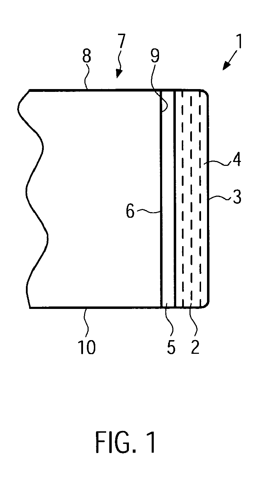

Es zeigt
- Fig. 1: Seitenansicht eines Gegenstandes mit einer erfindungsmäßen Profilleiste

Die Fig. 1 zeigt einen Gegenstand 7, wobei der Gegenstand 7 als Möbelplatte und die Profilleiste 1 als Kantenband ausgebildet ist. Die Profilleiste 1 weist einen mehrschichtigen Aufbau auf, wobei zumindest eine Schicht 2 der Profilleiste 1 Bestandteile 4 aufweist, die teilweise aus der Oberfläche der Schicht 2 der Profilleiste 1 herausragen und wobei die Oberfläche der Schicht 2 der Profilleiste 1 eine mittlere Rautiefe R_{z} von wenigstens 25 µm aufweist.

Der Schichtaufbau der am Gegenstand 7 angeordneten Profilleiste 1 soll im Folgenden weiter erläutert werden.
Eine an der Sichtseite 3 der Profilleiste 1 sichtbare Dekorschicht 2 enthält Bestandteile 4, welche teilchenförmig ausgebildet sind und wobei die Teilchen eine Größe von wenigstens 0,05 mm bis 5,0 mm aufweisen, ein thermoplastisch verarbeitbares Material als Matrix und weitere Additive / Zusatzstoffe aufweisen, um ein bevorzugtes Eigenschaftsprofil der Dekorschicht 2 einzustellen.
Die Bestandteile 4 des thermoplastisch verarbeitbaren Materials sind in feiner, vorzugsweise gleichmäßiger Verteilung in der beispielsweise Dekorschicht 2 eingebettet. Dabei weisen die Bestandteile 4 des thermoplastisch verarbeitbaren Materials eine Dichte von etwa 2,5 g/cm³ auf und der Anteil der Bestandteile 4 in der Dekorschicht 2 beträgt zwischen 10 und 90 Gewichts-Prozent, vorzugsweise zwischen 30 und 70 Gewichts-Prozent, bevorzugt zwischen 40 und 60 Gewichts-Prozent.
Ein Anteil des thermoplastisch verarbeitbaren Materials der Deckschicht 2 beträgt vorzugsweise zwischen 90 und 10 Gewichts-Prozent, vorzugsweise zwischen 70 und 30 Gewichts-Prozent, bevorzugt zwischen 60 und 40 Gewichts-Prozent. Der als Matrixmaterial bzw. Bindemittel in der Dekorschicht 2 zwar enthaltene thermoplastisch verarbeitbare Werkstoff ist bevorzugt ausgewählt aus der Gruppe der Polyolefine, der Acrylnitril-Butadien-Styrole, der Polyamide, der Polyvinylchloride, der Ethylenvinylacetate, der Polyacetale, der Polymethylmethacrylate, der Polyethylenterephthalate, der Polycarbonate, der thermoplastischen Copolyester, der Styrol-Blockcopolymere, der thermoplastischen Copolyamide, der thermoplastischen Elastomere und dergleichen oder aus Mischungen dieser.
Das thermoplastisch verarbeitbare Material der Dekorschicht 2 weist eine Schmelztemperatur von etwa 190 bis 230 °C auf.
Eine Trägerschicht 5 weist eine gegenüber der Dekorschicht 2 unterschiedlich chemische Zusammensetzung auf, enthält aber vorzugsweise ähnliche bzw. identische Materialbestandteile wie die Dekorschicht 2.
Die Trägerschicht 5 der Profilleiste 1 besteht vorzugsweise aus dem gleichen thermoplastisch verarbeitbaren Material, welches in der Dekorschicht 2 als Bindemittel eingesetzt ist, wobei die Dekorschicht 2 und die Trägerschicht 5 vorzugsweise im Koextrusionsverfahren einstückig hergestellt und stoffschlüssig verbunden sind. Bei Bedarf ist die Trägerschicht 5 beispielsweise durch die Beimischung von mineralischen Füllstoffen wie Talkum, Kreide und dergleichen oder Verstärkungsstoffen wie Fasern, vorzugsweise Glasfasern verstärkt.

Die Profilleiste 1 kann bei Bedarf eine Imprägnierung und / oder Schutzbeschichtung mit Wachs und / oder Lack aufweisen. Die Imprägnierung und / oder Schutzbeschichtung wird vorzugsweise auf die Sichtseite 3 der Profilleiste 1 aufgetragen.
Bei Bedarf kann zumindest eine Schicht der Profilleiste 1 einen Farbstoff enthalten, um möglichst eine originalgetreue Einfärbung der Profilleiste in einem gängigen Farbton, welcher ähnlich zur Oberfläche des Gegenstandes 7 ist, zu erhalten.
Auf der Unterseite der Profilleiste 1 kann eine Haftvermittlerschicht vorgesehen sein.

In Fig. 1 ist ein erfindungsgemäßer Gegenstand 7 mit einer Oberseite 8, einer Stirnseite 9 und einer Unterseite 10, sowie die an der Stirnseite 9 des Gegenstandes 7 angebrachte, erfindungsgemäße Profilleiste 1 dargestellt.
Der Gegenstand 7 ist im vorliegenden Ausführungsbeispiel eine im Wesentlichen aus Holz gefertigte Möbelbauplatte beispielsweise eine Küchenarbeitsplatte oder eine Tischplatte. Die Profilleiste 1 ist mit der Unterseite 6 an der Stirnseite 9 des Gegenstandes 7 angebracht, vorzugsweise stoffschlüssig angeklebt bzw. angeschweißt.
Die Profilleiste 1, welche im Koextrusionsverfahren in einer größeren Breite hergestellt worden ist, als die Dicke des Gegenstandes 7 ist im dargestellten Ausführungsbeispiel an ihren längsrandseitigen Sichtkanten profiliert bzw. spanend nachbearbeitet, so dass die Breite der Profilleiste 1 der Dicke des Gegenstandes 7 entspricht. Dabei können die längsrandseitigen Sichtkanten der Profilleiste 1 durch eine beispielsweise spanabhebende Bearbeitung auch abgerundet sein.

In diesem Ausführungsbeispiel umfasst die erfindungsgemäße Profilleiste eine Dekorschicht mit etwa 60 Gewichts-Prozent Bestandteilen 4 und einem Anteil eines thermoplastisch verarbeitbaren Materials bspw. PMMA von etwa 40 Gewichts-Prozent.
Die Trägerschicht 2 besteht zu 100 % aus dem thermoplastisch verarbeitbaren Material PMMA.
Die Profilleiste 1 ist im an sich bekannten Koextrusionsverfahren gefertigt und die Trägerschicht 5 der Dekorschicht 2 unmittelbar benachbart angeordnet.
Die Profilleiste 1 weist im nicht nachgearbeiteten Zustand in diesem Ausführungsbeispiel eine Breite von ca. 23 mm auf. Durch eine spanabhebende Nachbearbeitung der längsrandseitigen Sichtkanten wird die Breite der Profilleiste 1 auf die Dicke der Stirnseite 9 des als Möbelplatte ausgebildeten Gegenstandes 7 abgestimmt und beträgt im nachgearbeiteten Zustand ca. 19 mm.

Die Gesamtdicke der Profilleiste 1, die sich senkrecht zur Sichtseite 3 bzw. zur Unterseite 6 der Profilleiste bemisst, beträgt ca. 1,5 mm.
Ein Verhältnis einer Dicke der Dekorschicht 2 zu einer Dicke der Trägerschicht 5 beträgt ca. vier wobei die Dekorschicht 2 eine Dicke von etwa 1,1 mm aufweist und die Trägerschicht 5 eine Dicke von ca. 0,3 mm aufweist.
Die Trägerschicht 5 ist in einem Farbton eingefärbt, welcher im Wesentlichen dem Grundfarbton der Bestandteile der Dekorschicht 2 und dem Grundfarbton der Oberfläche 8 des Gegenstandes 7 entspricht.
Der Gesamtfarbton der erfindungsgemäßen Profilleiste 1 ist auf einen Gesamtfarbton insbesondere der Oberfläche 8 des Gegenstandes 7 abgestimmt.

Es liegt jedoch auch im Rahmen der Erfindung, dass die erfindungsgemäße Profilleiste 1 wenigstens eine Schicht (2, 5) aus einem thermoplastisch verarbeitbaren Material aufweist, wobei das thermoplastisch verarbeitbare Material Bestandteile 4 aufweist, die in der Profilleiste 1 beabstandet voneinander angeordnet sind, wobei die Bestandteile 4 wenigstens teilweise aus der Oberfläche der Profilleiste 1 herausragen und das die Oberfläche der Profilleiste 1 eine mittlere Rautiefe R_{z} von wenigstens 25 µm aufweist.
Dabei ist die erfindungsgemäße Profilleiste einschichtig im an sich bekannten Verfahren der Extrusion hergestellt und die Dekorschicht 2 bzw. die Trägerschicht 5 sind als eine Schicht hergestellt, so dass die erfindungsgemäße Profilleiste 1 mit ihrer Unterseite 6 an der Stirnseite 9 des als Möbelplatte ausgebildeten Gegenstandes 7 anbringbar ist.

## Patentansprüche

1. Profilleiste, insbesondere Kantenleiste für die Möbelindustrie, wobei die Profilleiste (1) wenigstens eine Schicht (2) aus einem thermoplastisch verarbeitbaren Material aufweist, wobei das thermoplastisch verarbeitbare Material Bestandteile aufweist, die in der Profilleiste (1) aneinander und/oder beabstandet voneinander angeordnet sind, **dadurch gekennzeichnet, dass** die Bestandteile wenigstens teilweise aus der Oberfläche der Profilleiste (1) herausragen und dass die Oberfläche der Profilleiste (1) eine mittlere Rautiefe R_{z} von wenigstens 25 µm aufweist.

2. Profilleiste nach Anspruch 1, **dadurch gekennzeichnet, dass** die Bestandteile in dem thermoplastisch verarbeitbaren Material der Profilleiste (1) teilchenförmig ausgebildet sind, wobei die Teilchen eine Größe von wenigstens 0,05 mm bis 5,0 mm aufweisen, vorzugsweise 0,5 bis 1,5 mm.

3. Profilleiste nach einem der vorhergehenden Ansprüche, **dadurch gekennzeichnet, dass** das Verhältnis des Schmelzpunktes der Bestandteile zu dem Schmelzpunkt des thermoplastisch verarbeitbaren Materials der Profilleiste (1) wenigstens 1,1 beträgt.

4. Profilleiste nach einem der vorhergehenden Ansprüche, **dadurch gekennzeichnet, dass** die Bestandteile des thermoplastisch verarbeitbaren Materials der Profilleiste (1) eine Dichte von wenigstens 0,8 g/cm³ bis maximal 2,5 g/cm³ aufweisen.

5. Profilleiste nach einem der vorhergehenden Ansprüche, **dadurch gekennzeichnet, dass** das thermoplastisch verarbeitbare Material der Profilleiste (1) Bestandteile aufweist, die wenigstens teilweise vernetzt sind.

6. Profilleiste nach einem der vorhergehenden Ansprüche, **dadurch gekennzeichnet, dass** das thermoplastisch verarbeitbare Material der Profilleiste (1) 2 bis 80 %, vorzugsweise 5 bis 25 %, Bestandteile aufweist, die wenigstens teilweise vernetzt sind.

7. Profilleiste nach einem der vorhergehenden Ansprüche, **dadurch gekennzeichnet, dass** die Bestandteile des thermoplastisch verarbeitbaren Materiales der Profilleiste (1) einen Vernetzungsgrad von 5 bis 95 % aufweist.

8. Profilleiste nach einem der vorangegangenen Ansprüche, **gekennzeichnet durch** einen mehrschichtigen Aufbau, wobei zumindest eine Schicht (2) der Profilleiste (1) Bestandteile aufweist, wobei die Bestandteile wenigstens teilweise aus der Oberfläche der Profilleiste (1) herausragen, wobei die Oberfläche der Profilleiste (1) eine mittlere Rautiefe R_{z} von wenigstens 25 µm aufweist und zumindest eine Schicht (2) der Profilleiste (1) im Extrusionsverfahren gefertigt ist.

9. Profilleiste nach einem der vorangegangenen Ansprüche, **gekennzeichnet durch** einen mehrschichtigen Aufbau, wobei zumindest eine Schicht (2) der Profilleiste (1) Bestandteile aufweist, die wenigstens teilweise vernetzt sind und zumindest eine Schicht (2) der Profilleiste (1) im Extrusionsverfahren gefertigt ist.

10. Profilleiste nach einem der vorangegangenen Ansprüche, **dadurch gekennzeichnet, dass** die Profilleiste (1) eine Dekorschicht (2) aufweist, die die Bestandteile aufweist, die teilchenförmig ausgebildet sind sowie eine Größe von wenigstens 0,05 mm bis 5,0 mm aufweisen, vorzugsweise 0,5 bis 1,5 mm und/oder die wenigstens teilweise vernetzbar sind und die an einer Sichtseite (3) der Profilleiste (1) sichtbar ist.

11. Profilleiste nach einem der vorangegangenen Ansprüche, **dadurch gekennzeichnet, dass** ein Anteil der Bestandteile in der Profilleiste (1) und/oder der Dekorschicht (2) zwischen 10 und 90 Gew.-%, vorzugsweise zwischen 30 und 70 Gew.-%, bevorzugt zwischen 40 und 60 Gew.-%, und besonders bevorzugt 50 Gew.-% beträgt.

12. Profilleiste nach einem der vorangegangenen Ansprüche, **dadurch gekennzeichnet, dass** das thermoplastisch verarbeitbare Material der Profilleiste (1) und/oder der Trägerschicht (5) und/oder der Dekorschicht (2) ausgewählt ist aus der Gruppe der Polyolefine, der Acrylnitril-Butadien-Styrole, der Polyamide, der Polyvinylchloride, der Ethylenvinylacetate, der Polyacetale, der Polymethylmethacrylate, der Polyethylenterephthalate, der Polycarbonate, der thermoplastischen Copolyester, der Styrol-Blockcopolymere, der thermoplastischen Copolyamide, der thermoplastischen Elastomere und dergleichen oder aus Mischungen dieser.

13. Profilleiste nach einem der vorangegangenen Ansprüche, **dadurch gekennzeichnet, dass** ein Anteil des Kunststoffs in der Profilleiste (1) und/oder der Trägerschicht (5) und/oder in der Dekorschicht (2) zwischen 90 und 10 Gew.-%, vorzugsweise zwischen 70 und 30 Gew.-%, bevorzugt zwischen 60 und 40 Gew.-%, und besonders bevorzugt 50 Gew.-% beträgt.

14. Gegenstand (7), insbesondere Möbelstück oder dergleichen, mit einer Profilleiste (1) nach einem der vorangegangenen Ansprüche.

15. Gegenstand (7) nach Anspruch 15, wobei die Profilleiste (1) mit einer der Sichtseite (3) abgewandten Unterseite (6) an dem Gegenstand (7) angebracht ist.
